# EUROPEAN PATENT APPLICATION

(11) **EP 0 758 538 A1**
(43) Date of publication of application: **19.02.1997**
(21) Application number: 95112568.1
(22) Date of filing: 10.08.1995
(51) Int. Cl.: A47J 37/12

(54) **Process and automatic apparatus for preparing fried potato product from dehydrated potato**

(71) Applicant: Kovacs, Laszlo, Long Beach, California (US); Stark, Eberhard, 9545 Wangi/Thurgau (CH); Szarka, Károly, 2000 Szentendre (HU)
(72) Inventor: Kovacs, Laszlo, Long Beach, California (US); Stark, Eberhard, 9545 Wangi/Thurgau (CH); Szarka, Károly, 2000 Szentendre (HU)
(74) Representative: Cohausz & Florack

(57) **Abstract**

This invention is related to a process and automatic apparatus of novel system concept for delivering formatted, freshly fried potato products from dehydrated potato. The process comprises the steps of measuring the temperature of frying oil during the frying time; computing the introduced energy amount by integrating the temperature of frying oil on frying time; and determining the termination of frying time on the term that said introduced energy amount equals to a predetermined constant value.

The apparatus according to the present invention comprises at least two temperature sensors located on different height levels in the frying unit (7); a unit to average the signals of said temperature sensors during frying time and to integrate the averaged temperature of the frying oil on the frying time, and thereby computing the amount of the introduced energy. Said unit controls the interruption of frying in case of attaining a predetermined constant amount of energy to be introduced.

## Description

This application is related to a process and automatic apparatus of novel system concept for delivering formatted, freshly fried potato products from dehydrated potato, particularly for individual consumers. The frying principle is different from that of the prior art solutions.

It is an object of the present invention to provide an automatic system without inspection producing potato forms from dehydrated potato product by means of a wetting and a formatting operation and delivering the fried potato forms for the customer.

This object is achieved by a process the steps of which include frying the potato product prepared with addition of at least water in subsequent cycles, heating the frying oil received in a container by controlled electric power; controlling the dwelling time of a portion of rehydrated potato product in frying oil as frying time in each cycle; measuring the temperature of frying oil during the frying time; computing the introduced energy amount by integrating the temperature of frying oil on frying time; and determining the termination of frying time on the term that said introduced energy amount equals to a predetermined constant value.

The automatic apparatus for delivering fried potato products from dehydrated potato prepared with addition of at least water in subsequent cycles, equipped with frying oil container including a heating element to heat the frying oil by controlled electric power and having a frying unit controlling the dwelling time of a portion of rehydrated potato product in frying oil as frying time in each cycle comprises according to the invention at least two temperature sensors located on different height levels in the frying unit and a unit to average the signals of said temperature sensors during frying time and to integrate the averaged temperature of the frying oil on the frying time, and thereby computing the amount of the introduced energy. Said unit controls the interruption of frying in case of attaining a predetermined constant amount of introduced energy.

An embodiment of the automatic apparatus embodying the frying process according to the invention will be described by way of an example in connection with accompanying drawings.
Fig. 1 shows a front view of an embodiment of the automatic potato frying apparatus according to the present invention;
Fig. 2 shows a side view of the embodiment of Fig. 1;
Fig. 3 shows the cross-sectional side view of the press mechanism of the apparatus according to Fig. 1.
Fig. 4 shows the different cup positions in the top view of the press mechanism of the apparatus according to Fig. 1;

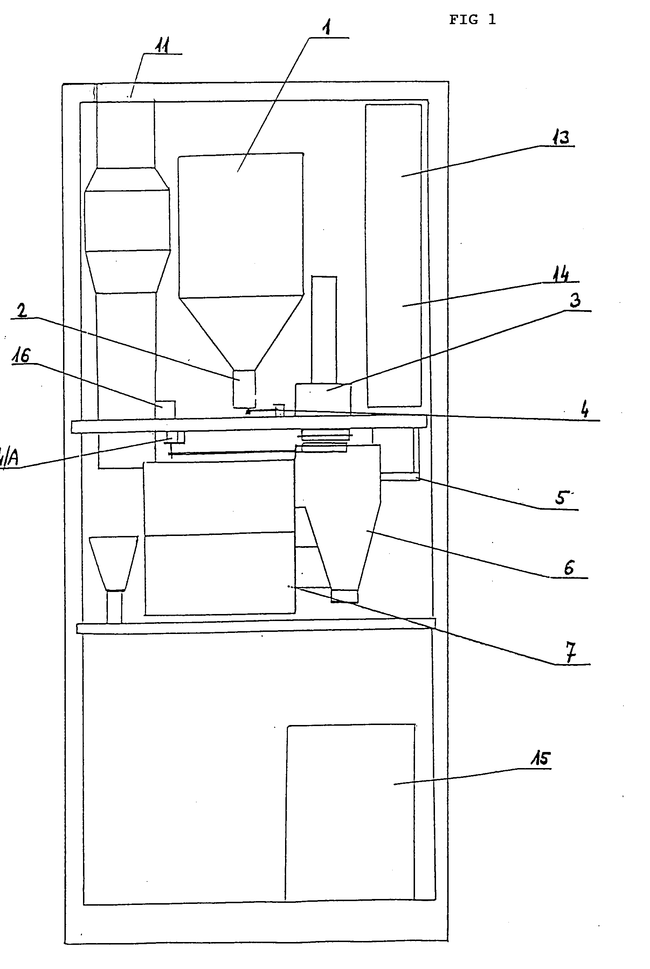

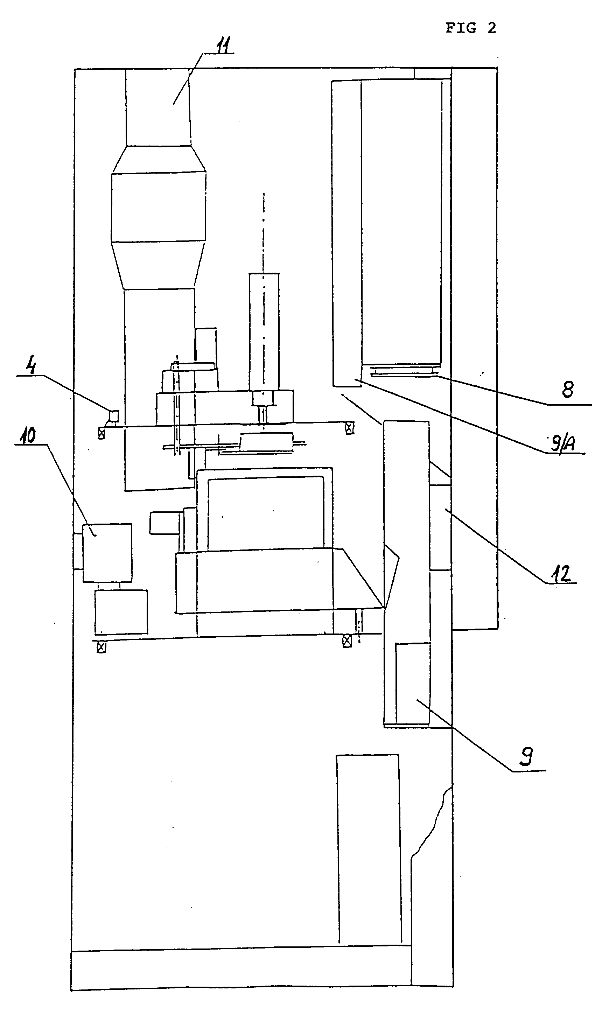

An illustrative embodiment of the automatic frying apparatus is shown in Fig. 1 and 2, in front and side view, as an example. This apparatus includes a granulate container 1, a granulate metering mechanism 2, a press mechanism 3, a rehydrating head 4, a knife 4A, a cleaning unit 5, a conveyor belt 6, a frying unit 7, a paper cup delivering mechanism 8, a finish product dispensing chute 9, an ingredients delivering system 9A, a water system 10, an exhaust system 11, a coin validator 12, a mains electric unit 13, a control computer 14, a waste water container 15 and an oil pump 16. A possible relative arrangement of these functional elements can be identified by Fig. 1 and 2 respectively.

The granulate container 1 serves for the storage of the starting potato product, that is the potato granulate and is made from a material generally admitted in the food industry. For facilitating the manipulation there is provided a means for visual checking of the level. This preferably means a window.

The granulate metering mechanism 2 measures a predetermined amount of granulate for a portion on base of volume measuring and transfers it into a cup 34 where rehydrating occurs.

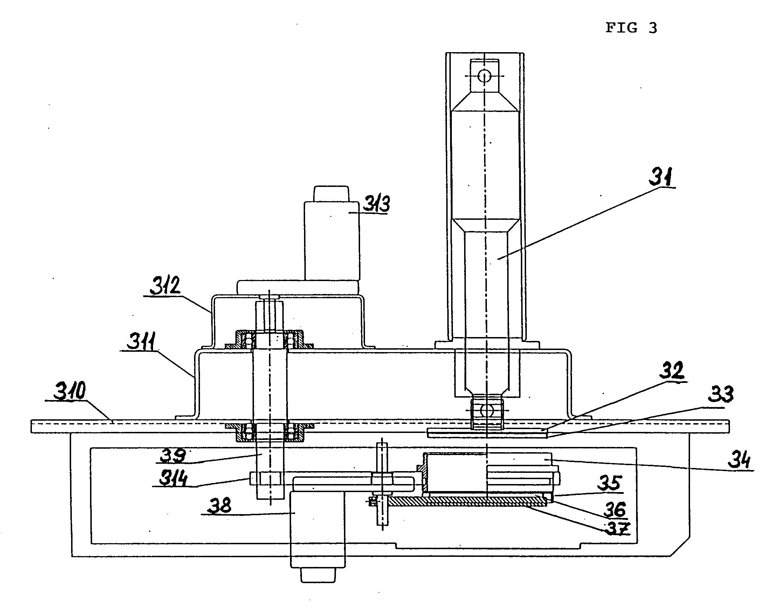

Referring to Fig. 3 said cup 34 is shown in cross-section together with its surroundings, the press mechanism 3 which will be described later. The cup 34 is preferably made of steel material appropriate for apparatuses applied in food industry. The use of this material facilitates the cleaning operations. Said cup 34 includes a ring shaped portion. Said ring shaped portion can be equipped with an inner cutting insert or grid in the form for example of wires. The ring shaped portion is closed at its lower side by a closing plate 35 displaceable in its own plane by means of platen arm 37 and a motor 38. Said closing plate 35 closes the ring shaped portion at its bottom during rehydrating and pressing the granulate. The displaceable construction typically means furthermore that the horizontal closing plate 35 and/or the ring shaped portion can be rotated about a vertical shaft 39 in relation one to another. A motor 313 for driving said shaft 39 is also provided. Supports 311 and 312 mounted onto base plate 310 provide location and fixation of shaft 39 and motor 313, at a suitable height. Preferably a heating element 36 is located beneath the closing plate 35.

The granulate metering mechanism 2 comprises three uniform racks and is constructed from vanes rotating about a horizontal axis. The mechanism 2 is driven by means of a motor measuring a portion from the starting potato product, that is the potato granulate after a rotation of the axis by 120°. An optoelectrical sensor putting the apparatus out of service in case of running out of the supply stock is placed at the inlet of the mechanism 2.

The press mechanism 3 transfers the dehydrated potato supply stock charged in the cup 34 from below the granulate metering mechanism 2 under the rehydrating head 4, then under a press. The press mechanism 3 and its positions are shown on Fig. 2 in top view. Arm 314 holding cup 34 is mounted on a vertical shaft 39. Arm 314 rotating about vertical shaft 39 moves cup 34 along a horizontal circular path.

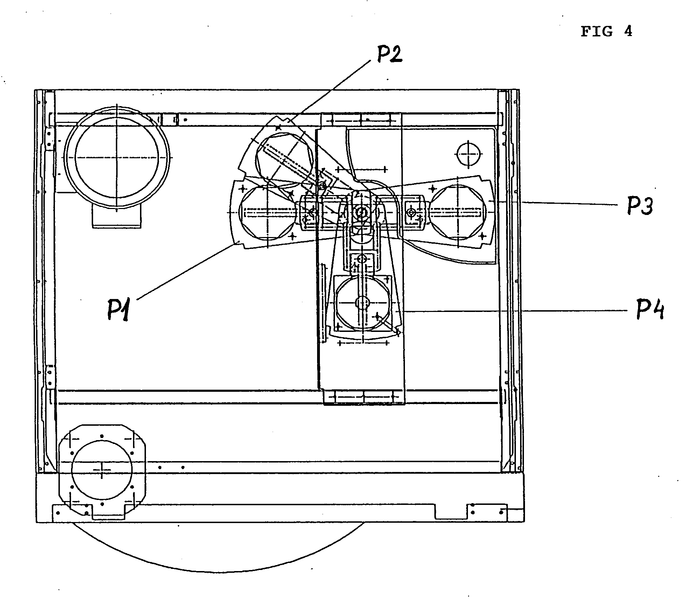

The press mechanism 3 operates as follows, with respect of cup positions indicated in Fig.4. The cup 34 after being filled with granulate in feeding position P1, is transferred by rotating of vertical shaft 39 first under the rehydrating head 4, in rehydrating position P2 where it is remoistened. Then arm 314 transfers cup 34 and the rehydrated material contented in cup 34 under the press. Now cup 34 is mechanically fixed by the mechanism in an intermediate pressing position P3. Closing plate 35 turns out from below cup 34, thereby allowing pressing through the mold formed by the cutting insert or grid. Closing plate 35 can be heated by heating element 36 for preventing possible bacterial contamination. The rehydrated product is pressed in more steps by means of the press through the cutting insert and is cut after each transfer by moving the knife unit. The proper vertical motion of the platen 32 and the stamp 33 of the press is ensured by an electromechanical actuator 31. Each pressing operation is followed by a cutting operation of the knife. The pressing cycle is repeated until the contents of cup 34. are emptied. The alternating cycle, that is a cutting and a pressing shapes the desired form of the potato product to be fried. After the last pressing, the press rises into the rest position. Arm 314 now moves further into the cleaning unit 5, in cleaning position P4. In the cleaning unit 5 closing plate 35 is displaced. Thus the adhered potato product can be well removed from the ring of the cup 34 and from the closing plate 35 by means of cold water jet. It will be noted here that the good cleanability of the parts contacting with the potato product is an important requirement. In prior art apparatuses the fulfillment of this requirement met difficulties. In the apparatus according to the present invention the design of the parts allows the cleaning by a simple process using water.

The platen 32 of the press is made of steel and has a silicone rubber stamp 33 with inside voids. In case of appropriate arrangement said voids allow the fitting in in the rubber of the formatting elements located in the cup 34 during the last pressing, thus ensuring a sufficiently plane surface for cutting.

The rehydrating head 4 together with a 3/2-way solenoid valve is located over the moistening position of cup 34. The rehydrating head 4 sprays hot water on the surface of the measured potato granulate in an amount according to the portion as controlled by the control computer 14 (see also the description of the water system 10).

The knife 4A is mounted on the frame and by a reciprocating movement along an arch corresponding to an angle of about 20° cuts the potato product pressed out downwards on the bottom of the cup 34 after turning of the closing plate in the current pressing step. To induce greater stability the knife is sliding on a reinforcing arm, thus ensuring the minimal gap underneath the cup. The knife can be constituted for example by a thin stressed steel wire.

After pressing out the potato from the cup, the cleaning unit 5 cleans the closing plate and the cup from the adhered potato product by means of spray heads using cold water. The use of cold water prevents the gelatinization in the adhered rest product. The cleaning unit 5 contains spray heads mounted on the upper plate of the unit tilted in an optimal angle.

Before starting up the press the conveyor belt 6 is activated and during cutting transfers the falling formatted semi-finished product into the frying unit 7. Cutting is carried out inside the housing of conveyor belt 6 thus ensuring the removal of possibly developing waste. The waste moves into the waste collecting container located in the bottom part of the unit. Collection of the waste is helped by the elastic rim positioned near the edge of conveyor belt 6.

Frying unit 7 is housed in a lower and in an upper insulated housing respectively. The lower and upper housings are heat-insulated and are equipped with a double casing. In the lower insulating housing of the frying unit 7 an oil container is inserted, which container is made of stainless steel and equipped with an outlet valve. The upper insulated casing and the housing of the heating wire and of the temperature sensor are mounted on a hinge and attached to the lower insulated casing on the right side. The moveability of the said two units ensures the easy cleaning and maintenance of the frying unit 7. After turning out the upper insulated casing in which two baskets are situated on motor driven rotating shafts, the baskets can be lifted out for cleaning after releasing the fastening. After lifting out the baskets, the electric unit of the heating wire also can be turned out, thus allowing the removal the corrosion resistant steel lining of the fryer. Two temperature sensors mounted inside the oil container serve the control of oil temperature and in the same time they maintain the operating oil level in the fryer. The temperature sensors are positioned at different height levels, thus ensuring not only the more reliable measurement of the frying oil temperature by averaging of two values measured on two locations, but on the principle of a significant difference observed between the two values, recognizable by continuous detection, the conclusion can be drawn that the oil level has dropped below the temperature sensor located higher. In that case frying oil can be added into the oil container. For that purpose preferably a given portion of additional oil is introduced. After a short pause aiming the equalization of heat distribution by mixing, the introduction of oil may be repeated, perhaps several times, until the significant decrease of the difference between the temperatures indicated by the two temperature sensors. Said difference may be for example a difference lower than 10°C normally, and the decision treshold difference value can be set for example to 20°C.

Frying unit 7 includes preferably a security switch functioning on the principle of gas expansion. Said security switch cuts off the apparatus in case of technical defects.

At the beginning of frying the formatted potato is transferred in the first basket and is held here until the first half of the corresponding frying cycle. Then the basket is turned by the revolving of the motor, and potato is transferred in the second basket. Here takes place the second half of frying. The fully fried potato is subsequently transferred into the finish product dispensing chute 9. The use of two baskets allows the initiation of frying on base of a new ordering before full finishing of the preceding portion.

The principal solution of frying is based not on the uniform temperature or on constant time, but rather a computer examines the amount of energy introduced in the system by the simultaneous observation of time and temperature parameters, and makes equal in each cycle said energy amount independently for example from the temperature conditions subsisting at the starting of the cycle, thus ensuring uniform frying of each portion. This feature is important because the given apparatus effects control in the range of ±10°C about the optimal operating temperature. This feature compensates not only the inequalities arising in the heating power of frying oil, but also the inequalities caused by orders following rapidly each another and by operating cycles.

Motors moving baskets and conveyor belt are located on the upper housing. The conveyor belt is hanged up on the lower insulating casing. While the frying unit of prior art automatic apparatuses could be lifted out and replaced as a whole, the frying unit 7 of the apparatus according to the present invention is constituted from elements that can be lifted out and replaced separately. Thus baskets, heating element 36 and oil recipient container can be separately manipulated, turned out about axis, then removed. That is an important advantage in view of the considerable weight of frying units furnished with heat insulation too, to be handled in case of traditional automatic apparatuses by the maintenance personal.

The paper cup delivering mechanism 8 is located on the door of the apparatus. Here are stored the paper cups arranged in columns until delivery of the finish product. At the delivery point a paper cup dispenser drops the paper cups one by one to the finish product entry point through a tube.

The formatted fried potato leaving the fryer moves into the trough like finish product dispensing chute 9. After detecting the delivery of the paper cup and the presence of said cup in the delivery space the formatted fried potato is pushed through the introducing aperture in the paper cup dropping tube and from here by gravitation in the paper cup. In order to push the potato in said tube the finish product dispensing chute 9 is rotated (raised) about a point of rotation near the paper cup dropping tube by means of a motor. The careful selection of the diameters of the paper cup and of the paper cup dropping tube ensures the waste free dispensation of the product into the paper cup. Preferably the inner diameter of the dropping tube is slightly larger than the largest outer diameter at the aperture of the paper cup. When the diameter difference is smaller than the smallest diameter of smallest occurring fried potato product, then each piece is dispensed in the paper cup. Finish product is delivered for the consumer through a door on the opposite side of the introducing part of finish product dispensing chute 9.

The apparatus includes further an ingredients delivering system 9A. The consumer may want ingredient material sets for example ketchup, salt and wet napkin or mayonnaise salt and wet napkin to the potato. These ingredients are placed in column like dispensing towers on the door of the cupboard for paper cup storage. After corresponding selection a dispensing motor delivers the unit box of ingredients. Said box is slipping on a chute into the delivery space.

The water system 10 is designed according to Hungarian utility model no. 475. The main point of water system 10 is that the quantitative measuring of the moistening liquid, that is water is carried out with the greatest possible exactness, preferably by means of circulated liquid flow circuit. Continuous circulation ensures that in case of opening of the valves the water mass present in water pipes must not to be accelerated. The acceleration of the water mass would cause the non-linear proportionality with time of the measured amount of water.

The exhaust system 11 comprises a built in exhaust fan, a preliminary filter and main filter to discharge oil vapor and excess heat from over the fryer.

Coin validator 12 receives coins and eventually returns change.

Mains electric unit 13 distributes and supplies supply voltage to the units using mains voltage and to the supply unit producing low voltage.

Control computer 14 generates control and check signals required to the operation of the apparatus and allows the coordinated operation of different units.

Waste water container 15 accumulates waste water arriving from cleaning unit 5 when there is no possibility of attachment on sewage system. Waste water container 15 is protected against overflow by means of a level switch.

Oil pump 16 fills additional oil from oil reservoir into the fryer when the level sensor of the fryer, preferably on base of sudden rise of temperature difference measured by both temperature sensors suddenly rises. As mentioned in the description of the fryer, oil pump 16 can be operated intermittently.

The system arrangement constituted from the above described units allows the installation similar to that of the well-known automatic apparatuses.

Selector buttons to be used by the consumer are provided on the apparatus. So he/she can order diverse portions, fried potatoes delivered with one or another ingredient, and can follow the process of preparation for instance on illuminated pictograms. Preferably price and other information and/or maintenance and service information can be displayed on an LCD.

Preferably the apparatus is provided with self-diagnostic system facilitating the maintenance and serviceability.

### Reference numerals

- 1: granulate container
- 2: granulate metering mechanism
- 3: press mechanism
- 31: electromechanical actuator
- 32: platen
- 33: stamp
- 34: cup
- 35: closing plate
- 36: heating element
- 37: platen arm
- 38: motor
- 39: shaft
- 310: base plate
- 311: support
- 312: support
- 313: motor
- 314: arm
- 4: rehydrating head
- 4A: knife
- 5: cleaning unit
- 6: conveyor belt
- 7: frying unit
- 8: paper cup delivering mechanism
- 9: finish product dispensing chute
- 9A: ingredients delivering system
- 10: water system
- 11: exhaust system
- 12: coin validator
- 13: mains electric unit
- 14: control computer
- 15: waste water container
- 16: oil pump
- P1: feeding position
- P2: rehydrating position
- P3: pressing position
- P4: cleaning position

## Claims

1. A process for preparing fried potato product from dehydrated potato, frying the potato product previously prepared with addition of at least water, being carried out in subsequent cycles, wherein frying oil received in a container is heated by controlled electric power; and the dwelling time of a portion of rehydrated potato product in frying oil is controlled as frying time in each cycle, comprising the steps of
measuring the temperature of frying oil during the frying time;
computing the introduced energy amount by integrating the temperature of frying oil on frying time; and
determining the termination of frying time on the term that said introduced energy amount equals to a predetermined constant value.

2. The process according to claim 1 characterized in that the dehydrated potato product is a granulate, and for metering a portion from said granulate there is provided a metering mechanism operating on base of volume measuring.

3. The process according to claim 2 characterized in that there is provided a metering mechanism comprising more racks and constituted from vanes rotating about a horizontal axis.

4. The process according to one of the preceding claims characterized in that the water is added by metering exactly a dose of hot water and spraying out said dose of water downwards by means of a spray head over a portion of dehydrated potato previously fed in a cup (34).

5. The process according to claim 4 characterized in that the exact metering of hot water is carried out by means of a circulated liquid circuit.

6. The process according to claim 5 or 6 characterized in that the rehydrated potato product prepared from dehydrated potato with addition of at least water and received in cup (34) is pressed, then cut before frying.

7. The process according to claim 6 characterized in that pressing is effected through a mold formed by grid, by a plurality of pressing steps

8. The process according to claim 6 or 7 characterized in that cutting is effected by means of a knife unit reciprocating in an angle of about 20°.

9. The process according to one of the claims 4 to 8 characterized in that preceding the step of frying in oil in each cycle a cup (34) is charged with dehydrated potato granulate in a feeding position (P1), then the granulate is moistened by a rehydrating head in a rehydrating position (P2), subsequently the rehydrated material is pressed in a pressing position (P3), and the rehydrated material adhered to the cup (34) is removed by means of cold water jet.

10. An automatic apparatus for delivering fried potato products from dehydrated potato prepared with addition of at least water in subsequent cycles, having a frying unit (7) equipped with frying oil container including a heating element (36) to heat the frying oil by controlled electric power; and the frying unit (7) controlling the dwelling time of a portion of rehydrated potato product in frying oil as frying time in each cycle, characterized in that the apparatus comprising
at least two temperature sensors located on different height levels in the oil container of the frying unit (7);
a unit to average the signals of said temperature sensors during frying time and to integrate the averaged temperature of the frying oil on the frying time, and thereby computing the amount of the introduced energy; and
said unit controls the interruption of frying in case of attaining a predetermined constant amount of energy to be introduced.
